# EUROPÄISCHE PATENTANMELDUNG

(11) **EP 2 006 135 A2**
(43) Veröffentlichungstag der Anmeldung: **24.12.2008**
(21) Anmeldenummer: 08104235.0
(22) Anmeldetag: 03.06.2008
(51) Int. Cl.: B60J 5/04

(54) **Ein- oder mehrflügelige Fahrgasttür für ein Fahrzeug des öffentlichen Personenverkehrs**

(30) Priorität: 20.06.2007 DE 202007008782 U
(71) Anmelder: Gebr. Bode GmbH & Co. KG, 34123 Kassel (DE)
(72) Erfinder: Coochesfahani, Abbas Rasekhi, 34128 Kassel (DE)
(74) Vertreter: Kayser, Martin

(57) **Zusammenfassung**

Die Erfindung betrifft eine ein- oder mehrflügelige Fahrgasttür für ein Fahrzeug des öffentlichen Personenverkehrs, wobei jeder Türflügel eine an der bezüglich des Fahrgastraums liegenden Außenseite des Türflügels angeordnete Glasscheibe aufweist, die zur Halterung ausschließlich über eine auf einer bezüglich des Fahrgastraums liegenden Innenseite der Glasscheibe angeordnete Trägervorrichtung mit dem Fahrzeug verbindbar ist.

## Beschreibung

Ein- oder mehrflügelige Fahrgasttür für ein Fahrzeug des öffentlichen Personenverkehrs.

Die Erfindung betrifft eine ein- oder mehrflügelige Fahrgasttür für ein Fahrzeug des öffentlichen Personenverkehrs mit einer Glasscheibe. Bei derartigen bekannten Türen besteht der Türflügel aus einem Rahmen, in welchen die Glasscheibe eingesetzt ist. Der von außen sichtbare Rahmen ist aus Stabilitätsgründen meistens aus einem metallenen Werkstoff gefertigt. Der Rahmen weist Befestigungsvorrichtungen auf, an denen der Türantrieb oder sonstige Lager- und Führungsvorrichtungen zur Befestigung am Türportal des Fahrzeugs ansetzen können.

Damit der Türflügel dicht mit dem Portal abschließen kann, ist im Bereich der Schließkante ein Dichtelement mit einer oder mehreren Dichtungslippen angeordnet, welche beispielsweise ein Elastomer-Profil umfassen kann, welches bei geschlossener Tür an einer am Portal angeordneten Abdichtleiste anliegt.

Die Befestigung des parallel zur Schließkante verlaufenden Dichtelements am Rahmen erfolgt mittels eines Fußes, welcher in eine entsprechende Ausnehmung des Rahmens eingesteckt wird. Es können zudem Sensoren in dem Dichtelement integriert sein, welche einen Einklemmschutz gewährleisten. Solche bekannten Dichtelemente werden beispielsweise in der DE 298 02 987 U1 und der EP 1 504 942 A1 beschrieben.

Nachteilig an den bekannten Ausführungen ist, dass auf Grund des außen liegenden Rahmens die Lackierung, Fertigung und Montage kostenaufwändig ist. Beispielsweise müssen bei einer Lackierung eine Vielzahl von Arbeitsschritten durchgeführt werden: Schleifen, Reinigen, Grundieren (Korrosionsschutz), Schleifen, Spachteln, Schleifen, Grundanstrich, Schleifen, Füller, Schleifen, Deckanstrich mit Farbton und Deckanstrich mit Klarlack. Zudem wird der ästhetische Eindruck der Tür durch den von außen sichtbaren Rahmen negativ beeinträchtigt.

Es ist die Aufgabe der Erfindung, eine Fahrgasttür für ein Fahrzeug des öffentlichen Personenverkehrs bereitzustellen, welche die beschriebenen Nachteile nicht aufweist.

Die Erfindung löst die Aufgabe mit den Merkmalen aus Schutzanspruch 1. Vorteilhafte Weiterbildungen sind Bestandteil der abhängigen Ansprüche.

Es ist ein Grundgedanke der Erfindung, dass die an der bezüglich des Fahrgastraums liegenden Außenseite des Türflügels angeordnete Glasscheibe nicht mehr in einen die Scheibe umgebenden Rahmen eingesetzt wird. Die Glasscheibe ist zur mechanischen Halterung ausschließlich über eine auf einer zum Fahrgastraum liegenden Innenseite der äußeren Glasscheibe angeordneten Trägervorrichtung mit dem Fahrzeug verbindbar. Von außen ist die Trägervorrichtung nur noch durch die Glasscheibe sichtbar. Wenn nach außen hin nur noch die Glasscheibe liegt, kann auf eine aufwändige, wetterbeständige Lackierung verzichtet werden.

Die Glasscheibe kann sich über den gesamten Türflügel erstrecken. Folglich kann die Glasscheibe größer ausgeführt werden, so dass zudem mehr Licht in den Innenraum des Fahrzeugs gelangen kann. Die Glasscheibe kann auch aus einzelnen aneinander angrenzenden und im Wesentlichen in einer Ebene liegenden Glassegmenten zusammengesetzt sein, wobei die Spalte zwischen den Glassegmenten durch die Trägervorrichtung verdeckt werden können, so dass die Spalte vom Fahrgastraum aus nicht sichtbar sind.

Zur einfachen Montage kann die Glasscheibe auf die Trägervorrichtung aufgeklebt werden. Bevorzugt umfasst die Trägervorrichtung einen Rahmen. Dieser kann sich annähernd über den gesamten Türflügel erstrecken. Somit kann eine stabiler Halt der Glasscheibe erreicht werden. Der Rahmen kann zwei horizontal verlaufende Rahmenabschnitte (oben und unten am Türflügel) sowie zwei vertikal verlaufenden Rahmenabschnitte an den Seiten aufweisen.

Im Bereich der Mitte des Türflügels und/oder im unteren Bereich des Türflügels kann der Rahmen mindestens eine horizontale verlaufende Verstrebung aufweisen. Somit kann ein Ausfallschutz erreicht werden.

Dieser Ausfallschutz verhindert, dass Fahrgäste bei einem Glasbruch durch die zerbrochene Glasscheibe herausfallen.

Die Trägervorrichtung kann am oberen horizontal verlaufenden Rahmenabschnitt eine Befestigungsvorrichtung zur Verbindung des Türantriebs aufweisen. Zudem kann an einer der horizontal verlaufenden Verstrebungen oder am unteren horizontal verlaufenden Rahmenabschnitt eine Führungsvorrichtung zur Verbindung mit dem Fahrzeug angeordnet sein. So kann der Türflügel insgesamt über zwei mechanische Anbindungen, wie einen Türflügelhalter im oberen Bereich und eine Führungsschiene im unteren Bereich, geführt werden. Die Führungsvorrichtung kann somit zum Führen des Türflügels über eine Anbindung mit einem unteren Schwenkarm einer Drehsäule dienen.

Die Trägervorrichtung kann, insbesondere wenn sie vom Fahrgastraum her sichtbar ist, aus Aluminium ausgeführt sein, wodurch sie eine ausreichende Stabilität bei gleichzeitig ansprechender Optik aufweist. Bei der Trägervorrichtung kann zudem auf eine Lackierung verzichtet werden. So kann beispielsweise nach dem ersten Schleifen und Reinigen eine Korrosionsschutzgrundierung aufgebracht werden, auf welche eine Pulverbeschichtung aufgetragen wird.

In einer bevorzugten Ausgestaltung ist das Dichtelement bei geschlossener Tür innen liegend. Hierdurch kann die Geräuschbildung verbessert werden. Zu den Vorteilen auf dem Gebiet der Ästhetik kann zudem eine Verbesserung der Verfügbarkeit und der Sicherheit erreicht werden, beispielsweise hinsichtlich einer Vereisung oder äußeren Beschädigung.

Das Dichtelement kann direkt an der Glasscheibe befestigt sein. Es kann jedoch auch an der Trägervorrichtung angeordnet sein. In einer bevorzugten Ausgestaltung verläuft das Dichtelement insbesondere mit einem Fuß in einer Nut der Trägervorrichtung. Hierbei kann das Dichtelement zwischen Trägervorrichtung und Glasscheibe eingeklemmt sein.

In einer anderen Ausgestaltung ist das Dichtelement direkt auf die Glasscheibe aufgeklebt.

Um die Kanten der Glasscheibe zu schützen und die Verletzungsgefahr für Personen zu verringern, kann stirnseitig an der Schließkante und den sonstigen Kanten ein Kantenschutzelement vorgesehen werden sein. Bevorzugt ist das Kantenschutzelement abgerundet und umfasst U-profilförmig die gesamte Breite der Schließkante. Das Kantenschutzelement besteht bevorzugt aus einem Kunststoffmaterial, wie PA, insbesondere aus einem elastomeren Material, wie Gummi, oder aus Aluminium und kann direkt auf der Glasscheibe aufgeklebt sein.
In einer weiteren Ausgestaltung ist das Dichtelement nicht an dem Türflügel sondern am Türportal angeordnet.

In einer anderen Ausgestaltung ist der Türflügel in einer Kompositbauweise aufgebaut und besteht aus einer äußeren Glasscheibe und einer inneren Glasscheibe. Hierbei kann die Trägervorrichtung zwischen den Glasscheiben angeordnet sein, wobei die Anbauteile, wie eine Befestigungsvorrichtung zur Verbindung des Türantriebs und/oder eine Führungsvorrichtung zur Verbindung mit dem Fahrzeug über Befestigungsmittel, vorzugsweise über Gewindebolzen, an der Trägervorrichtung befestigt sein können. Die Anbauteile können auch auf der inneren Glasscheibe aufgeklebt sein, so dass diese zur Trägervorrichtung zugehörig ist.

Die erfindungsgemäße Fahrgasttür kann als ein- oder mehrflügelige Schwenktür, Schiebetür oder Schwenkschiebetür ausgebildet sein.

Um von außen gesehen ein harmonisches Bild der Fahrgasttür zu erhalten, kann die Glasscheibe im Bereich der Trägervorrichtung insbesondere durch einen Keramikdruck bedruckt sein, so dass die Trägervorrichtung von außen nicht sichtbar ist. Falls die außen liegende Glasscheibe segmentiert ist, müssen nicht in notwendiger Weise sämtliche Segmente aus Glas bestehen, sondern sie können auch aus einem anderen beliebigen Material wie Metall oder Kunststoff bestehen. So sind Ausführung möglich, bei denen ein oder mehrere Segmente beispielsweise als Metallblech ausgeführt sind.

Im Folgenden werden anhand der Figuren 1 bis 9 mögliche Ausgestaltungen der Erfindung beschrieben. Es zeigen
- Fig. 1: eine Fahrgasttür in der Innenansicht;
- Fig. 2: die Fahrgasttür in einer Schnittansicht gemäß der Schnittlinie A-A in Fig. 1;
- Fig. 3: ein vergrößerter Ausschnitt der Darstellung nach Fig. 2;
- Fig. 4: eine zweite Ausgestaltung der Fahrgasttür in einer Schnittansicht;
- Fig. 5: eine dritte Ausgestaltung der Fahrgasttür in einer Schnittansicht;
- Fig. 6: eine vierte Ausgestaltung der Fahrgasttür in der Innenansicht;
- Fig. 7: die Fahrgasttür aus Fig. 6 in einer Schnittansicht gemäß der Schnittlinie A-A in Fig. 6;
- Fig. 8: die Fahrgasttür aus Fig. 6 in der Außenansicht; und
- Fig. 9: eine Detailansicht der Fahrgasttür gemäß dem Bereich B in Fig. 7.

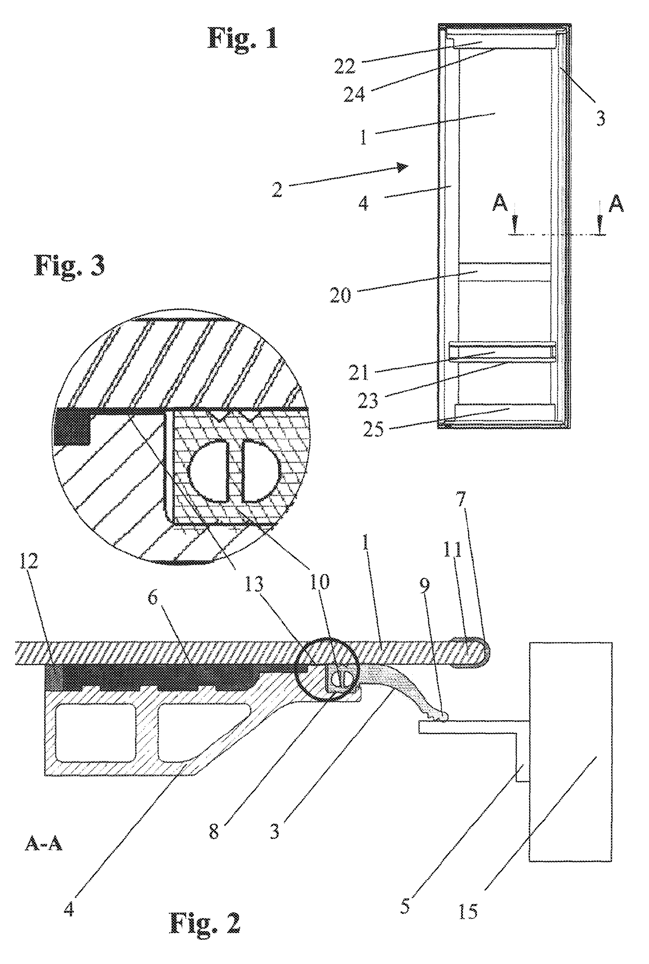

Die Fig. 1 zeigt den Türflügel 2 einer Fahrgasttür aus der Sicht des Fahrgastraumes eines nicht dargestellten Schienenfahrzeugs des öffentlichen Personenverkehrs. Der Türflügel 2 weist gemäß Fig. 2 eine einteilige Glasscheibe 1 auf, die über eine als Kleberbett 6 ausgeführte Klebeschicht auf einen Aluminiumrahmen 4 geklebt ist. Das Kleberbett 6 ist gemäß Fig. 3 von einem Klebeabschlussgummiprofil 12 und einem Kleberbettabschlussriemen 13 umgeben.

Der Rahmen 4 weist gemäß Fig. 1 im mittleren Bereich eine horizontale Verstrebung 20 als Ausfallschutz auf. Im unteren Bereich weist er zudem eine horizontal verlaufende Verstrebung 23 auf, an der eine Führungsvorrichtung 21 mit Führungsschienen angeordnet ist. Der obere horizontal verlaufende Rahmenabschnitt 24 weist eine Halterungsvorrichtung 22 auf, an die der nicht dargestellte Antrieb zum Öffnen und Schließen der Tür ansetzt. Je nach Anbindungsmöglichkeit des unteren Schwenkarms kann die Führungsvorrichtung 21 in einer nicht dargestellten Ausführung auch im unteren Rahmenabschnitt 25 angeordnet sein.

Die Fig. 2 zeigt in einer Schnittansicht gemäß der Schnittlinie A-A aus Fig. 1 in geschlossener Stellung der Fahrgasttür den Bereich der Schließkante 11 des Türflügels 2 und ein Türportal 15. Der Türflügel 2 weist im Bereich der vertikal verlaufenden Schließkante 11 ein umlaufendes Dichtelement 3 auf, welches als Elastomer-Profil ausgeführt ist. Es weist einen Klemmkörper 10 auf und ist zwischen dem Rahmen 4 und der Glasscheibe 1 eingeklemmt. Zu diesem Zweck weist der Rahmen 4 eine Nut 8 auf.

Das Dichtelement 3 weist zudem eine Gummidichtlippe 9 auf, welche in der geschlossenen Stellung der Tür gegen eine am Türportal 15 angeordnete Abdichtleiste 5 anliegt.

Im Bereich der Schließkante 11 weist die Stirnseite der Glasscheibe 1 ein Kantenschutzelement 7 auf, welches als Rund-Profil ausgestaltet ist und die gesamte Breite der Schließkante 11 der Glasscheibe 1 umfasst. Es besteht aus Aluminium und ist direkt auf die Glasscheibe 1 aufgeklebt.

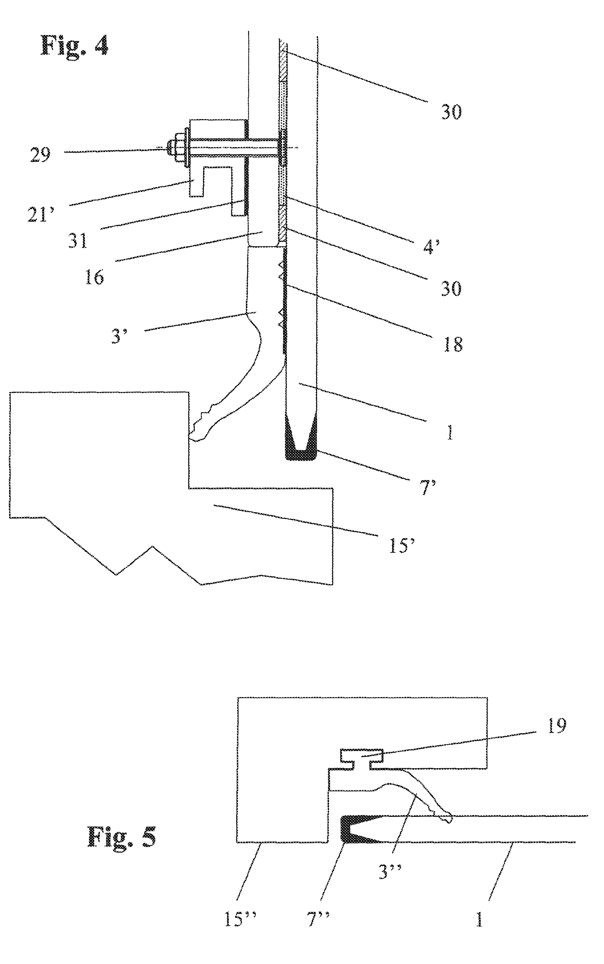

Bei der in Fig. 4 dargestellten zweiten Ausführung der Fahrgasttür, ist das Dichtelement 3' direkt über eine Kleberschicht 18 mit einer ersten, außen liegenden Glasscheibe 1 mit Kantenschutzelement 7' verbunden. Eine Dichtlippe des Dichtelements 3' in im geschlossenen Zustand der Tür mit einer Abdichtfläche des Türportals 15' in Kontakt. Der in Kompositbauweise ausgestaltete Türflügel weist eine zweite Glasscheibe 16 auf. Durch die Kompositbauweise (beispielsweise Glas-Blech-Glas) kann eine erhöhte Belastbarkeit erreicht werden. Zwischen den Glasscheiben 1 und 16 ist die Trägervorrichtung 4" zur Verbindung mit dem Fahrzeug über Führungsschienen und Türhalterungen über eine Füllmasse 30, wie transparentes Klebeharz, eine Folie oder teilweise ein Isoliergas, eingeklebt. Die Anbauteile, wie Türhalterung, Führungsvorrichtung und Türgriff können über Befestigungsmittel, insbesondere über eine Verschraubung, befestigt oder geklebt werden. In Fig. 4 ist eine Verschraubung der unteren Führungsvorrichtung 21' über ein Distanzstück 31 aus Kunststoff, wie PA oder ROM, mittels eines Gewindebolzens 29 als Befestigungsmittel dargestellt.

Die Fig. 5 zeigt eine dritte Ausführung der Fahrgasttür. Bei dieser Ausgestaltung ist das Dichtelement 3" über einen Dichtfuß 19 am Türportal 15" befestigt. Die Glasscheibe 1 des Türflügels weist wiederum ein Kantenschutzelement 7" auf, das die sich nach außen hin verjüngende Kante der Glasscheibe 1 umfasst.

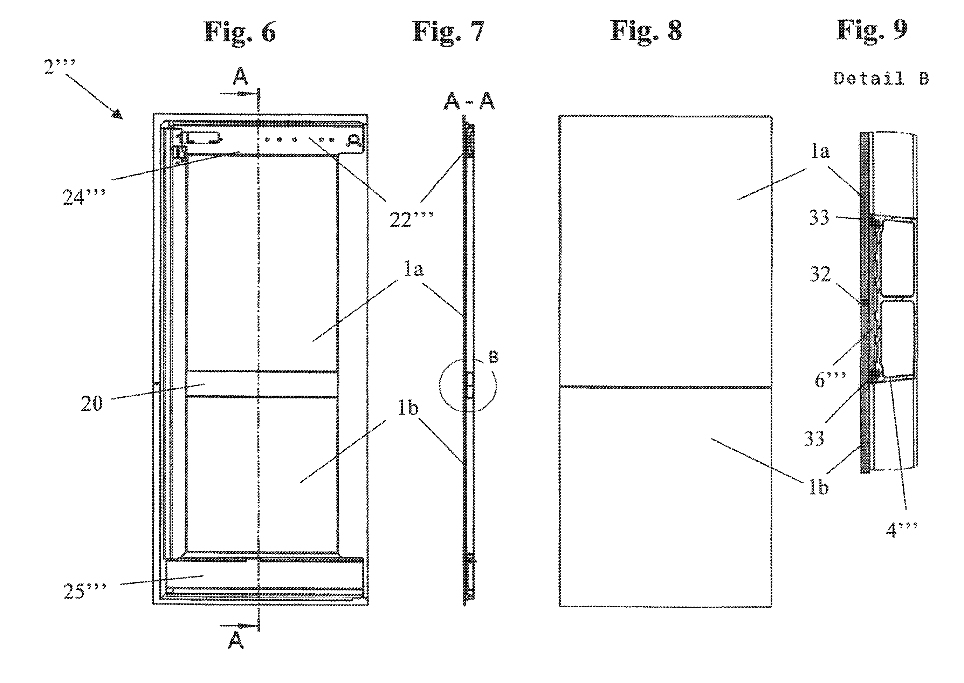

Die Fig. 6 bis 9 zeigen eine vierte Ausgestaltung eines Türflügels 2'" in verschiedenen Ansichten. Der Türflügel 2'" weist einen oberen Rahmenabschnitt 24"' mit einer Halterungsvorrichtung 22"', einen unteren Rahmenabschnitt 25"' mit integrierter Halterungsvorrichtung sowie eine horizontale Verstrebung 20 im mittleren Bereich auf. Der Kantenschutz und die Dichtelemente sind analog zur ersten Ausgestaltung nach den Fig. 1 bis 3 ausgeführt.

Die Glasscheibe des Türflügels besteht nicht aus einem durchgängigen Element sondern aus zwei einzelnen in einer Ebene liegenden Glassegmenten 1a und 1b, wobei der Spalt 32 zwischen den Glassegmenten 1a und 1b wie in Fig. 9 dargestellt mit einer Füllmasse ausgefüllt ist. Der Spalt 32 wird auf der Innenseite über die horizontale Verstrebung 20, die zugleich als Trägervorrichtung 4"' wirkt und die mittels einer Klebemasse 6"' an den Glassegmenten 1a und 1b befestigt ist, verdeckt. An den Rändern weist die Trägervorrichtung 4"' ein elastisches Abstandhalterelement 33 auf.

Das untere Segment 1b kann auch als Metallblech ausgeführt sein, so dass sich die Glasscheibe nur über den oberen Teil, nämlich das Glassegment 1a, des Türflügels 2'" erstreckt und der andere Teil aus einem anderen Material hergestellt ist.

## Patentansprüche

1. Ein- oder mehrflügelige Fahrgasttür für ein Fahrzeug des öffentlichen Personenverkehrs, wobei jeder Türflügel (2) eine an der bezüglich des Fahrgastraums liegenden Außenseite des Türflügels (2) angeordnete Glasscheibe (1) aufweist, die zur Halterung ausschließlich über eine auf einer bezüglich des Fahrgastraums liegenden Innenseite der Glasscheibe (1) angeordnete Trägervorrichtung (4) mit dem Fahrzeug verbindbar ist.

2. Fahrgasttür nach Anspruch 1, **dadurch gekennzeichnet, dass** sich die Glasscheibe (1) über den gesamten Türflügel (2) erstreckt.

3. Fahrgasttür nach Anspruch 1 oder 2, **dadurch gekennzeichnet, dass** die Glasscheibe (1) aus mehreren, insbesondere zwei, einzelnen aneinander angrenzenden und im Wesentlichen in einer Ebene liegenden Glassegmenten (1a, 1b) besteht.

4. Fahrgasttür nach einem der vorhergehenden Ansprüche, **dadurch gekennzeichnet, dass** die Glasscheibe (1) auf die Trägervorrichtung (4) aufgeklebt ist.

5. Fahrgasttür nach einem der vorhergehenden Ansprüche, **dadurch gekennzeichnet, dass** die Trägervorrichtung einen Rahmen (4) umfasst.

6. Fahrgasttür nach Anspruch 5, **dadurch gekennzeichnet, dass** sich der Rahmen (4) annähernd über den gesamten Türflügel (2) erstreckt.

7. Fahrgasttür nach Anspruch 5 oder 6, **dadurch gekennzeichnet, dass** der Rahmen (4) im Bereich der Mitte des Türflügels (2) mindestens eine horizontale Verstrebung (20) aufweist.

8. Fahrgasttür nach einem der Ansprüche 5 bis 7, **dadurch gekennzeichnet, dass** der Rahmen (4) im unteren Bereich des Türflügels (2) mindestens eine horizontale Verstrebung (23) aufweist.

9. Fahrgasttür nach einem der vorhergehenden Ansprüche, **dadurch gekennzeichnet, dass** die Trägervorrichtung (4) am oberen horizontal verlaufenden Rahmenabschnitt (24) eine Befestigungsvorrichtung (22) zur Verbindung des Türantriebs angeordnet ist.

10. Fahrgasttür nach einem der vorhergehenden Ansprüche, **dadurch gekennzeichnet, dass** an einer horizontal verlaufenden Verstrebung (20, 23) oder am unteren horizontal verlaufenden Rahmenabschnitt (25) eine Führungsvorrichtung (21) zur Verbindung mit dem Fahrzeug angeordnet ist.

11. Fahrgasttür nach einem der vorhergehenden Ansprüche, **dadurch gekennzeichnet, dass** im Bereich der Schließkante (11) der Glasscheibe (1) ein parallel zur Schließkante verlaufendes, elastisches Dichtelement (3), insbesondere ein Elastomer-Profil, angeordnet ist.

12. Fahrgasttür nach Anspruch 11, **dadurch gekennzeichnet, dass** das Dichtelement (3) direkt an der Glasscheibe (1) angeordnet ist.

13. Fahrgasttür nach Anspruch 11 oder 12, **dadurch gekennzeichnet, dass** das Dichtelement (3) an der Trägervorrichtung (4) angeordnet ist.

14. Fahrgasttür nach einem der Ansprüche 11 bis 13, **dadurch gekennzeichnet, dass** das Dichtelement (3) in einer Nut (8) der Trägervorrichtung (4) verläuft.

15. Fahrgasttür nach einem der Ansprüche 11 bis 14, **dadurch gekennzeichnet, dass** das Dichtelement (3) auf die Glasscheibe (1) aufgeklebt ist.

16. Fahrgasttür nach einem der Ansprüche 1 bis 11, **dadurch gekennzeichnet, dass** das Dichtelement (3) am Türportal (15) befestigt ist.

17. Fahrgasttür nach einem der vorhergehenden Ansprüche, **dadurch gekennzeichnet, dass** im Bereich der Schließkante (11) der Glasscheibe (1) stirnseitig ein parallel zur Schließkante verlaufendes Kantenschutzelement (7) direkt an der Glasscheibe (1) angeordnet ist.

18. Fahrgasttür nach Anspruch 17, **dadurch gekennzeichnet, dass** das Kantenschutzelement (7) abgerundet ist und die gesamte Breite der Schließkante (11) umfasst.

19. Fahrgasttür nach Anspruch 17 oder 18, **dadurch gekennzeichnet, dass** das Kantenschutzelement (7) aus einem Elastomer hergestellt ist.

20. Fahrgasttür nach Anspruch 17 oder 18, **dadurch gekennzeichnet**, **dadurch gekennzeichnet, dass** das Kantenschutzelement (7) aus Aluminium hergestellt ist.

21. Fahrgasttür nach einem Ansprüche 17 bis 20, **dadurch gekennzeichnet, dass** das Kantenschutzelement (7) auf die Glasscheibe (1) aufgeklebt ist.

22. Fahrgasttür nach einem der vorhergehenden Ansprüche, **dadurch gekennzeichnet, dass** die Trägervorrichtung (4) aus Aluminium hergestellt ist.

23. Fahrgasttür nach einem der vorhergehenden Ansprüche, **dadurch gekennzeichnet, dass** die Glasscheibe (1) im Bereich der Trägervorrichtung (4) einen Keramikdruck aufweist.

24. Fahrgasttür nach einem der vorhergehenden Ansprüche, **dadurch gekennzeichnet, dass** der Türflügel (2) aus einer äußeren Glasscheibe (1) und einer inneren Glasscheibe (16) besteht, wobei die Trägervorrichtung (4') zwischen den Glasscheiben (1, 16) angeordnet ist.

25. Fahrgasttür nach Anspruch 24, **dadurch gekennzeichnet, dass** eine Befestigungsvorrichtung (22) zur Verbindung des Türantriebs und/oder eine Führungsvorrichtung (21') zur Verbindung mit dem Fahrzeug an der Trägervorrichtung (4') befestigt, insbesondere verschraubt ist.

26. Fahrgasttür nach Anspruch 3 und insbesondere einem der Ansprüche 4 bis 25, **dadurch gekennzeichnet, dass** der Spalt (32) bzw. die Spalte zwischen den Glassegmenten (1a, 1b) von der Trägervorrichtung (4) verdeckt sind.

27. Fahrgasttür nach Anspruch 1 und insbesondere einem der Ansprüche 4 bis 26, **dadurch gekennzeichnet, dass** sich die Glasscheibe (1) nur über einen Teil, insbesondere den oberen Teil, des Türflügels (2) erstreckt und dass der andere Teil aus einem anderen Material, insbesondere aus Metall, hergestellt ist.
